# EUROPEAN PATENT APPLICATION

(11) **EP 4 717 498 A1**
(43) Date of publication of application: **01.04.2026**
(21) Application number: 25205140.4
(22) Date of filing: 26.09.2025
(51) Int. Cl.: B60L 1/00, B60L 15/00, B60L 53/10, B60L 53/14, B60L 53/22, B60L 53/24, B60L 53/62, B60L 53/63, H02J 7/02, H02M 1/00

(54) **DRIVE UNIT BOOST CONVERTER FOR ELECTRIC VEHICLES**

(30) Priority: 30.09.2024 US 202418902599
(71) Applicant: Tesla, Inc., Austin, TX 78725 (US)
(72) Inventor: COHEN, Justin Ty, Austin, Texas, 78725 (US); BAYLISS, III Roderick Sterndale, Austin, Texas, 78725 (US)
(74) Representative: Bryn-Jacobsen, Caelia

(57) **Abstract**

Examples relate to an electric vehicle charging system comprising a drive unit with a motor and inverter, a battery pack, a charging interface, and a controller. The controller reconfigures the drive unit to function as a boost converter, boosts voltage received from an external charging source using the reconfigured drive unit, and charges the battery pack with the boosted voltage. The system adaptively controls inverter switches during charging based on conditions, integrates EMI filtering components, and is compatible with various battery architectures. This approach enables efficient charging from different voltage sources while utilizing existing vehicle components.

## Description

### TECHNICAL FIELD

The present disclosures relate to electric vehicle charging systems and, in some examples, to algorithms and systems to utilize a vehicle's drive unit as a boost converter for efficient charging from various voltage sources.

### BACKGROUND

Electric vehicles have become increasingly prevalent in recent years, driven by advancements in battery technology and growing environmental concerns. However, the charging infrastructure for these vehicles presents several challenges. The existing charging network consists of a mix of different voltage levels, from standard 120V AC outlets to high-power DC fast chargers. This diversity in charging options creates complexity for vehicle manufacturers and users alike.

One significant challenge is the mismatch between charging station output voltages and vehicle battery pack voltages. As battery technology advances, there is a trend towards higher voltage battery packs to improve efficiency and reduce charging times. However, many existing charging stations operate at lower voltages, necessitating voltage conversion for efficient charging.

Another challenge is the need for vehicles to be compatible with various charging standards and protocols. This requirement adds complexity to vehicle electrical systems and increases costs. Additionally, the high power levels involved in fast charging create thermal management challenges and potential safety concerns that must be carefully addressed.

The charging process itself requires sophisticated control systems to optimize charging speed, battery longevity, and safety. These systems must account for factors such as battery state of charge, temperature, and cell balancing. As charging speeds increase, so does the complexity of these control systems.

Lastly, the integration of charging functionality with other vehicle systems, such as propulsion and auxiliary power, presents design challenges. Manufacturers must balance the need for efficient charging with other vehicle performance requirements, all while minimizing additional components and complexity.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a schematic diagram showing a high-level view of an electric vehicle charging system, according to some examples.
FIG. 2 is a flowchart illustrating a method of charging an electric vehicle battery using a reconfigurable drive unit, according to some examples.
FIG. 3 is a system diagram illustrating an electric vehicle charging system that utilizes two drive units as boost converters in parallel, according to some examples.
FIG. 4 is a system diagram illustrating an electric vehicle charging system that utilizes two drive units for charging, according to some examples.
FIG. 5 is a system diagram illustrating an architecture of an electric vehicle (EV), according to some examples.
FIG. 6 is a diagrammatic representation of a machine in the form of a computer system within which a set of instructions may be executed for causing the machine to perform any one or more of the methodologies discussed herein, in accordance with some examples.

### DETAILED DESCRIPTION

### Overview

The described examples seek to address technical challenges associated with efficiently charging electric vehicles from various power sources by repurposing existing components of a vehicle's drive unit. Examples aim to simplify the charging system, reduce costs, and improve compatibility with different charging infrastructures.

Some described example charging systems use an electric vehicle's drive unit, which may include an electric motor and an inverter, as a boost converter during the charging process. This dual-purpose use of components reduces or eliminates the need for additional dedicated charging hardware, potentially reducing system complexity and cost.

Example charging systems may include one or more controllers to manage the charging process. The controllers may determine the voltage level of the incoming power from the external charging source and configure the drive unit accordingly.

For high-voltage charging sources (e.g., 800V), charging systems may conduct charging current directly through the motor windings and inverter switches without boosting.

For lower-voltage sources (e.g., 400V), the drive unit is reconfigured to function as a boost converter. The reconfiguration process, in some examples, involves using the motor windings as inductors and the inverter switches as switching elements in the boost converter circuit. This arrangement allows example charging systems to step up the incoming voltage to the level required by a battery pack. The controllers may implement an adaptive control strategy for the inverter switches, which may involve Pulse Width Modulation (PWM) control at frequencies of 5-18 kHz, dynamic adjustment of duty cycles, and phase-shifted control of the three inverter legs to reduce ripple current.

Thus, an electric motor may serve a dual function. During normal vehicle operation, it provides propulsion. During charging, its windings act as inductors in the boost converter circuit. The motor's neutral point may be connected to the charging power input terminal through a relay, allowing the motor windings to be used for voltage boosting.

The inverter, typically used for converting DC power from the battery to AC power for the motor during driving, is repurposed during charging. Its switching elements (e.g., MOSFETs or IGBTs) are controlled to create the appropriate current paths for voltage boosting. In various example systems, the controllers may use either the high-side or low-side switches of the inverter based on charging conditions and efficiency considerations.

Example systems may also incorporate various relays and contactors to manage the power flow. These include a main relay connecting the battery to the inverter, fast charge contactors, and additional relays for routing power during different charging scenarios. The arrangement of these relays allows the system to adapt to different charging voltages and methods.

A DC link capacitor, connected to the output terminal of the battery, may form part of the boost converter circuit and help maintain a stable DC voltage. Additionally, example charging systems may include an X-capacitor and EMI filter. In some examples, the EMI filter is located at the charge port, while in other examples, the EMI filter is integrated within the drive unit, rather than at the charge port, to manage electromagnetic interference.

A battery pack may be configured for high-voltage operation (e.g., 800V or more). Example charging systems may be compatible with both even and odd-number module battery architectures, providing flexibility in battery pack design. This compatibility may be achieved by eliminating the need for access to a midpoint voltage in the battery pack, which may be required in systems using a Double Pole Double Throw (DPDT) switch method.

Example charging systems seek to provide an advantage in maintaining the high-voltage bus at a higher voltage (e.g., 800V ) during charging, even when connected to a lower voltage (e.g., 400V) charging source. This allows auxiliary systems such as a DC-DC converter and compressor to continue operating at 800V, rather than having to adapt to a lower 400V input. By maintaining the high-voltage bus at 800V, example systems seek to eliminate the need for these auxiliary components to be designed for dual-voltage operation, potentially reducing costs and improving overall system efficiency.

The described example charging systems offer several potential advantages. By repurposing existing drive unit components for charging, the example charging systems may reduce the need for additional hardware, potentially lowering costs and simplifying the overall design. The adaptive nature of the example charging systems can operate with various charging voltages, improving compatibility with different charging infrastructures. Additionally, the integration of the X-capacitor and EMI filter within the drive unit may offer improved electromagnetic compatibility.

### Electric vehicle charging system 100

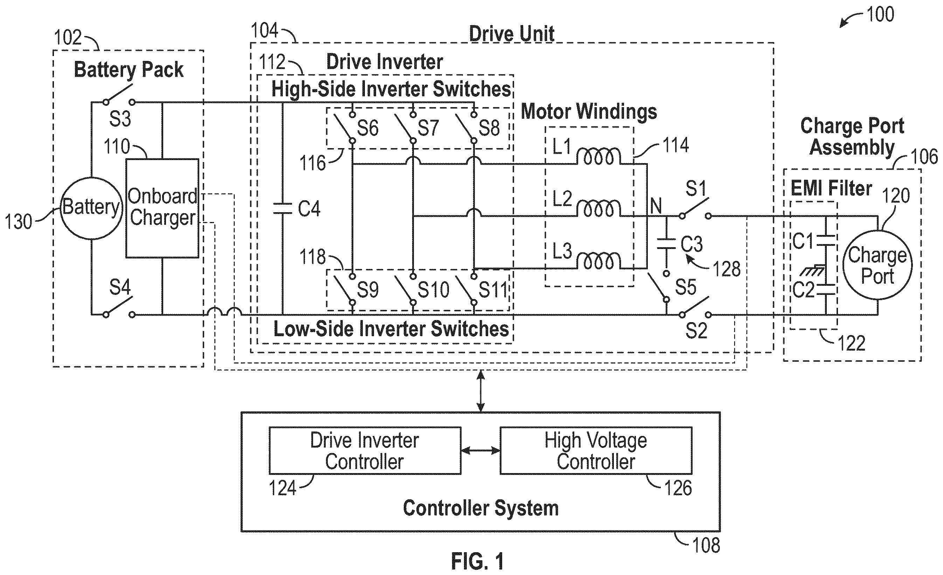

FIG. 1 is a schematic diagram showing a high-level view of an electric vehicle charging system 100, according to some examples. The electric vehicle charging system 100 forms part of a larger high-voltage electrical system of an electric vehicle, such as the charging system 502 and electric motors 504 of an electric vehicle 506.

The electric vehicle charging system 100 comprises a battery pack 102, a drive unit 104, a charge port assembly 106, and a controller system 108.

The battery pack 102 includes a battery and an onboard charger 110. The battery pack 102 connects to the drive unit 104 via switches S3 and S4, which may function as battery contactors.

The drive unit 104 comprises a drive inverter 112 and motor windings 114. The drive inverter 112 includes high-side inverter switches 116 (S6, S7, S8) and low-side inverter switches 118 (S9, S10, S11). These switches control current flow through the motor windings 114 (L1, L2, and L3).

The charge port assembly 106 includes a charge port 120 and an EMI filter 122, comprising capacitors C1 and C2. While the EMI filter 122 is shown to be part of the charge port assembly 106 in FIG. 1, in other examples the EMI filter 122 may be integrated into the drive unit 104 between the same two charge lines. The charge port 120 connects to the drive unit 104 via switches S1 and S2, which may function as fast charge contactors.

A capacitor C4 is positioned between the drive inverter 112 and the motor windings 114. This capacitor may function as a DC link capacitor to stabilize voltage during operation.

The controller system 108 includes controller components: the drive inverter controller 124 and the high-voltage (HV) controller 126. These controllers work together to manage the electric vehicle's high-voltage electrical system and optimize charging efficiency.

The drive inverter controller 124 is responsible for controlling the switches (e.g., (S6, S7, S8, S9, S10, S11) in the drive inverter 112. It manages these switches for multiple purposes, including:
1. Pulse-width modulation (PWM) during normal operation
2. Holding the switches closed during direct charging

The high-voltage (HV) controller 126 is tasked with controlling the contactors and relays (S1, S2, S3, S4, S5) in the electric vehicle charging system 100.

The drive inverter controller 124 and high-voltage (HV) controller 126 communicate with each other via the CAN bus, allowing for coordinated operation of the vehicle's electrical systems. In some examples, these controller functions may be integrated into a single controller unit.

The controller system 108 interfaces with various components of the electric vehicle, including:
1. Battery pack 102
2. Drive unit 104
3. Charge port assembly 106

By managing these components, the controller system 108 operatively reconfigures the drive unit 104 to function as a boost converter during charging. This reconfiguration uses the motor windings 114 as inductors and the inverter switches (e.g., the high-side inverter switches 116) switching elements, potentially improving charging performance.

During charging, the electric vehicle charging system 100 may operate in different modes depending on the input voltage. For direct charging, the high-side inverter switches 116 and switches S1, S2, S3, and S4 are closed to allow current flow from the charge port 120 to the battery pack 102. For boost conversion, the controller system 108 may utilize the motor windings 114 as inductors and the inverter switches (e.g., the high-side inverter switches 116) as switching elements.

The example electric vehicle charging system 100 includes an x-capacitor 128 (e.g., C3) or "X-cap" in the drive unit 104 and the EMI filter 122 within the charge port assembly 106, helping to manage electromagnetic interference and ensure compliance with regulatory requirements. This integration, along with the ability to use inverter switches (e.g. the high-side inverter switches 116) for conduction during high-voltage charging, eliminates the need for additional dedicated switches and simplifies the overall system architecture

The electric vehicle charging system 100 is further compatible with both even and odd-number module battery architectures, providing flexibility in battery pack design. The electric vehicle charging system 100 uses the drive unit 104 as a reconfigurable boost converter during charging, which can adapt to different battery configurations. This approach may, for example, eliminate or reduce the need for a dedicated double pole double throw (DPDT) switch, otherwise required for even-number module architectures, thus enabling compatibility with odd-number module configurations as well. Specifically, in some examples, the drive unit 104, when configured as a boost converter, can adjust the voltage level to match the requirements of the battery pack, regardless of the number of modules. This flexible voltage boosting allows for charging from various voltage sources (e.g., 400V or 800V) and adapting to different battery pack voltages.

### Adaptive Control Strategy

The electric vehicle charging system 100 may employ an adaptive control strategy that operates in a number of modes of operation, including the following:

### Drive Mode:

In drive mode, the controller system 108 manages the switching of the high-side inverter switches 116 ( e.g., S6, S7, S8) and low-side inverter switches 118 (e.g., S9, S10, S11) to control current flow through the motor windings 114 (e.g., L1, L2, and L3) for vehicle propulsion. The controller system 108 determines the switching pattern to achieve the desired motor performance. Switches S3 and S4 are closed during drive mode to connect the battery pack 102 to the drive unit 104, allowing current flow. Capacitor C4, which is part of the drive inverter 112, helps stabilize the voltage during drive mode operation.

### Charging Mode with No Boost Conversion:

In charging mode with no boost conversion, switches S1, S2, S3, and S4 and high-side inverter switches 116 (e.g., S6, S7, and S8) are closed to allow direct current flow from the charge port 120 to the battery pack 102.

This configuration enables charging the battery pack 102 directly from the charge port 120 without increasing the voltage. The EMI filter 122 (including capacitors C1 and C2), which is part of the charge port assembly 106, helps filter and stabilize the incoming charging voltage.

### Boost Conversion Mode:

In boost conversion mode, the controller system 108 reconfigures the drive unit 104 to function as a boost converter. The motor windings 114 (e.g., L1, L2, and L3) act as inductors in the boost converter circuit. The controller system 108 manages the high-side inverter switches 116 (e.g., S6, S7, S8) and low-side inverter switches 118 (S9, S10, S11) to enable the boost conversion process. The controller system 108 adjusts the duty cycle of the inverter switches to regulate the voltage boost applied to the incoming charge. This process increases the voltage from the charge port 120 to a level suitable for charging the battery pack 102.

The controller system 108 also closes the switch S5, to thus configure the electric vehicle charging system 100 to use the x-capacitor 128 (e.g., C3) to stabilize the input charger voltage during boost mode operation.

The DC link capacitor C4 stabilizes the output voltage of the drive inverter 112 and smooths out fluctuations during the boost conversion process.

The adaptive control strategy employed for the inverter switches during charging involves dynamically adjusting the switching patterns based on charging conditions to optimize efficiency and performance. The controller system 108 implements this strategy to manage the high-side inverter switches 116 (S6, S7, S8) and low-side inverter switches 118 (S9, S10, S11) during the boost conversion process.

The electric vehicle charging system 100 uses both the high-side inverter switches 116 and the low-side inverter switches 118 during the boost conversion mode.

Integration of the X-Cap (C3) and EMI filter (C1 AND C2)

The integration of the x-capacitor 128 into the drive unit 104 and EMI filter 122 within the charge port assembly 106 or drive unit 104 may serve multiple purposes:
- Electromagnetic Interference (EMI) Management: The EMI filter 122 suppresses electromagnetic interference generated during the charging process. The x-capacitor 128 is responsible for attenuating differential mode noise, while the EMI filter 122 helps reduce common mode noise.
- Regulatory Compliance: By effectively managing EMI, the integrated x-capacitor 128 and EMI filter 122 ensure that the charging system 502 complies with electromagnetic compatibility (EMC) regulations.
- System Integration: In some examples (not shown), both the EMI filter 122 and the x-capacitor 128 may be located in the drive unit 104, this providing a more compact and integrated design. This integration may reduce the overall system complexity and potentially lower manufacturing costs.
- Adaptability to Different Charging Scenarios: The integrated x-capacitor 128 and EMI filter 122 design allows the system to handle both 400V and 800V charging sources, contributing to its flexibility.

By integrating these components within the drive unit 104, the electric vehicle charging system 100 achieves effective EMI management and voltage stabilization while maintaining a compact design and ensuring regulatory compliance.

### Method 200

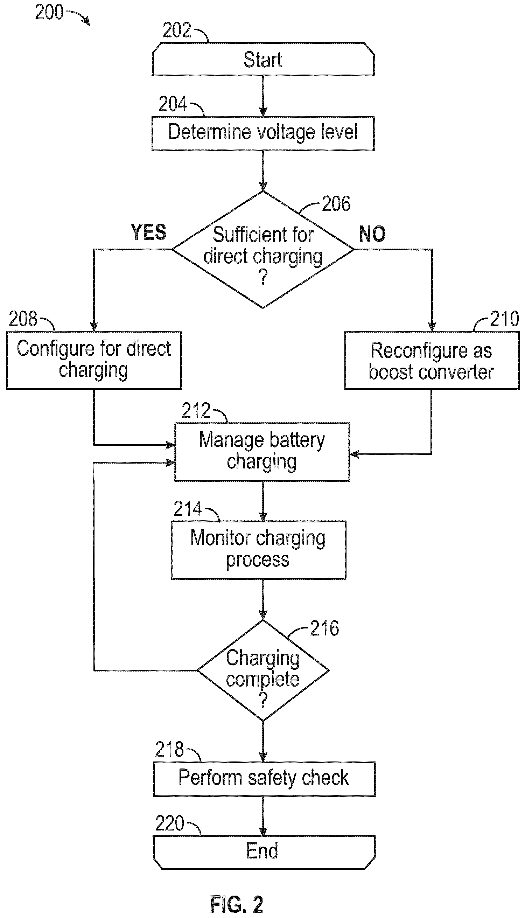

FIG. 2 is a flowchart illustrating a method 200, according to some examples, of charging an electric vehicle battery using a reconfigurable drive unit. Although the example method 200 depicts a particular sequence of operations, the sequence may be altered without departing from the scope of the present disclosure. For example, some of the operations depicted may be performed in parallel or in a different sequence that does not materially affect the function of the method 200. In some examples, different components of an example device or system that implements the method 200 may perform functions at substantially the same time or in a specific sequence.

At block 202, the method 200 begins. The controller system 108 (e.g., the high-voltage (HV) controller 126) initiates the charging process when an external power source is connected to the charge port 120.

At block 204, the controller system 108 (e.g., the high-voltage (HV) controller 126) determines the voltage level of the external power source. In some examples, at a high level, this determination involves measuring an electrical parameter at the charge port interface.

In more specific examples, the controller system 108 may use sensors integrated into the charge port assembly 106 to measure the voltage present at the charge port 120. These sensors may include voltage dividers, analog-to-digital converters, or other voltage-sensing circuitry to provide an accurate reading of the incoming voltage level.

At block 206, the controller system 108 evaluates whether the determined voltage is sufficient for direct charging of the battery pack 102. In some examples, at a high level, this evaluation involves comparing the measured voltage to a predetermined threshold.

In more specific examples, the controller system 108 may consider multiple factors in this evaluation, including:
- The current voltage of the battery pack 102, which may be obtained from a battery management system (BMS) 508.
- The maximum charging voltage supported by the battery pack 102.
- The minimum voltage differential required for efficient charging.

In even more specific examples, the controller system 108 may implement a decision-making algorithm that:
- Calculates the voltage difference between the external power source and the battery pack 102.
- Estimates the charging efficiency at the current voltage differential.
- Considers the thermal management capabilities of the electric vehicle charging system 100 to handle potential heat generation during charging.
- Evaluates the potential benefits of activating the boost converter mode versus direct charging in terms of overall charging time and system efficiency.

In some examples, the controller system 108 may compare the determined voltage level (or the voltage differential) to a threshold voltage required for direct charging of the battery pack 102. This comparison may involve calculating the voltage difference between the external power source and the battery pack 102, and considering factors such as the current voltage of the battery pack 102, the maximum charging voltage supported by the battery pack 102, and the minimum voltage differential required for efficient charging.

If the voltage is sufficient for direct charging, the method 200 proceeds to block 208. Here, in some examples, at a high level, the controller system 108 configures the electric vehicle charging system 100 for direct charging by establishing an electrical path between the charge port and the battery pack.

In more specific examples, the controller system 108 may perform the following actions to configure the system for direct charging:
- Close switches S1 and S2 to connect the charge port 120 to the drive unit 104.
- Close switches S3 and S4 to connect the battery pack 102 to the drive unit 104.
- Close the high-side inverter switches 116 (e.g., S6, S7, S8) and keep the low-side inverter switches 118 (e.g., S9, S10, S11) open.
- Keep switch S5 open.

In even more specific examples, the controller system 108 may implement a sequence of operations to safely configure the electric vehicle charging system 100 for direct charging:
- Verify the voltage levels at the charge port 120 and the battery pack 102 to ensure they are within acceptable ranges for direct charging.
- Perform pre-charge operations to minimize inrush current when connecting the charge port to the battery pack.
- Close switches S1 and S2 in a specific order, potentially with a slight delay between them, to establish the connection to the charge port 120.
- Close switches S3 and S4 in a specific order to connect the battery pack 102.
- Close the high-side inverter switches 116 (e.g., S6, S7, S8) and keep the low-side inverter switches 118 (e.g., S9, S10, S11) open.
- Monitor the current flow and voltage levels immediately after closing the switches to ensure proper operation.
- Activate the relevant portions of the battery management system (BMS) 508 to oversee the charging process.
- Configure the power electronics 510 and voltage conversion system 512 to support the direct charging mode.

If the voltage is not sufficient for direct charging, the method 200 proceeds to block 210. In some examples, at a high level, the controller system 108 reconfigures the drive unit 104 to function as a boost converter, enabling voltage conversion from a lower input voltage to a higher output voltage suitable for charging the battery pack 102.

In more specific examples, the controller system 108 may perform the following actions to reconfigure the drive unit 104 as a boost converter:
- Activate the appropriate switches (e.g., S1, S2, S3, S4) to establish a current path from the charge port 120 through the drive unit 104 to the battery pack 102.
- Configure the high-side inverter switches 116 (e.g., S6, S7, S8) and low-side inverter switches 118 (S9, S10, S11) to operate as switching elements in the boost converter circuit.
- Use the motor windings 114 (e.g., L1, L2, L3) as inductors in the boost converter circuit.

To configure the high-side inverter switches 116 (e.g., S6, S7, S8) and low-side inverter switches 118 (e.g., S9, S10, S11) to operate as switching elements in the boost converter circuit, the controller system 108 may, in some examples, close both the high-side inverter switches 116 (e.g., S6, S7, S8) and the low-side inverter switches 118 (e.g., S9, S10, S11). The switches may be controlled by the controller system 108 to operate in a switching pattern typical of a boost converter. This involves rapidly turning the switches on and off at a high frequency. The controller system 108 may further adjust the duty cycle of the inverter switches to regulate the voltage boost. By varying the on-time and off-time of the switches, the controller system 108 can control the amount of voltage increase.

In more specific examples, the controller system 108 may implement an interleaved switching strategy, where multiple phases of the inverters are used in a coordinated manner to reduce current ripple and improve efficiency. The controller system 108 may further continuously monitor key parameters such as input current, output voltage, and component temperatures to ensure the safe and efficient operation of the boost converter. Based on these measurements, it would dynamically adjust the switching strategy.

Further, configuration by the controller system 108 of the electric vehicle charging system 100 for boost conversion mode includes closing the switch S5 to activate the x-capacitor 128, this effectively connects the x-capacitor 128 into the circuit pathway. This capacitor, also known as a harmonic filter or power factor correction capacitor, is used in conjunction with other components to manage and reduce the number of harmonics generated by converters. The x-capacitor 128 operatively absorbs and releases charge in response to voltage fluctuations within the power network, thereby mitigating harmonic currents that could otherwise cause instability or efficiency losses.

At block 212, the controller system 108 manages the battery charging process. In direct charging mode, this may involve monitoring current flow and adjusting charge rates. In boost converter mode, the controller system 108 may adjust the duty cycle of the inverter switches to regulate the voltage boost applied to the incoming charge.

At block 214, the controller system 108 monitors the charging process. This monitoring may include tracking battery temperature, state of charge, and other relevant parameters.

At block 216, the controller system 108 determines if the charging is complete. This determination may be based on the battery pack reaching a predetermined state of charge or other charging completion criteria.

If charging is not complete, the method 200 loops back to block 212 to continue managing the charging process. If charging is complete, the method proceeds to block 218.

At block 218, the controller system 108 performs a safety check. This check may involve verifying that systems are in a safe state before disconnecting the external power source.

At block 220, the method ends. The controller system 108 may signal that charging is complete and that it is safe to disconnect the external power source.

### Electric vehicle charging system 300

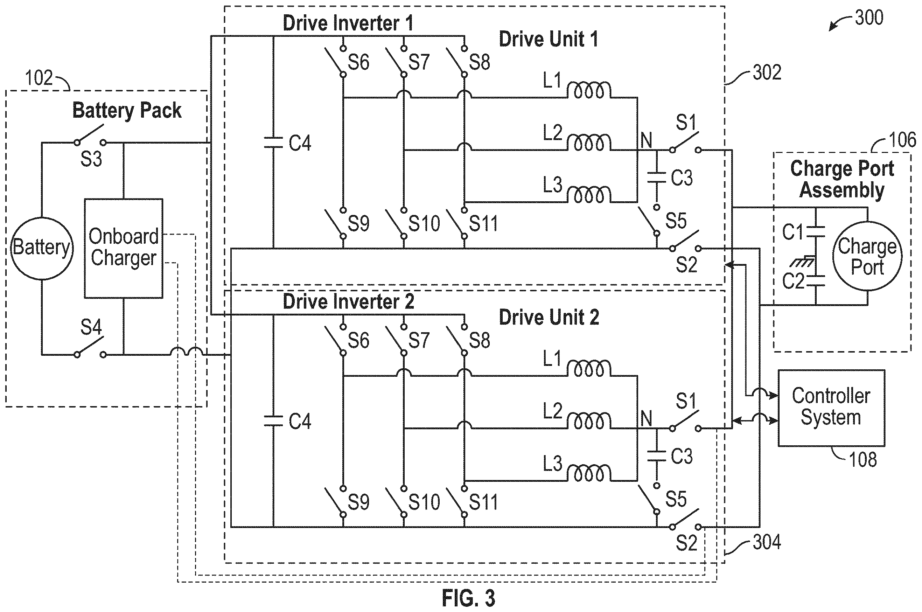

FIG. 3 is a system diagram illustrating an electric vehicle charging system 300 that uses two drive units as boost converters in parallel, according to some examples. This configuration builds upon the single drive unit system shown in FIG. 1 and the charging method 200 depicted in FIG. 2.

The electric vehicle charging system 300 comprises a charge port assembly 106, two drive units (302 and 304), a battery pack 102, and a controller system 108. Each drive unit contains a drive inverter with high-side inverter switches (e.g., S6, S7, S8) and low-side inverter switches (e.g., S9, S10, S11), as well as motor windings (e.g., L1, L2, L3) that function as inductors during the boost conversion process.

In some examples, the electric vehicle charging system 300 may use the two drive units 302 and 304 to increase charging power capacity and handle different charging scenarios.

At a high level, the controller system 108 may configure the drive units differently based on the incoming voltage from the external charging source. For 400V to 800V boost charging, for example, both drive units may operate as boost converters. For 800V charging, the drive units may be configured for direct charging without voltage boost.

In more specific examples, the controller system 108 may implement the following configurations:
For 400V to 800V boost charging:
- Close switches S1, S2, S3, and S4 to connect the charge port assembly 106 to the battery pack 102 through both drive units.
- Configure the inverter switches (S6-S11) in both drive units to operate as switching elements for boost conversion.
- Utilize the motor windings (L1, L2, L3) in both drive units as inductors for the boost converter circuit.
- Close switch S5 in both drive units to activate the x-capacitors (C3) for voltage stabilization.
- Implement an interleaved switching strategy to reduce current ripple and improve efficiency.

For 800V direct charging:
- Close switches S1, S2, S3, and S4 to connect the charge port assembly 106 to the battery pack 102.
- Close the high-side inverter switches (S6, S7, S8) in both drive units while keeping the low-side inverter switches (S9, S10, S11) open.
- Configure the motor windings (L1, L2, L3) in both drive units to act as current pathways.
- Keep switch S5 open in both drive units, as the x-capacitor (C3) is not needed for direct charging.

In even more specific examples, the controller system 108 may:
For boost conversion:
- Implement a phase-shifted PWM control strategy for the inverter switches, operating at frequencies between 5-18 kHz.
- Dynamically adjust the duty cycle of the switches based on the input voltage and desired output voltage.
- Monitor the current through each drive unit and balance the load between them to optimize efficiency and thermal management.
- Utilize the DC link capacitors (C4) in both drive units to help stabilize voltage during the boost conversion process.

For direct charging:
- Monitor the current flow through both drive units and adjust the charging rate if necessary to prevent overheating or excessive current in components of the electric vehicle charging system 300.
- Utilize the parallel configuration of the drive units to handle higher current levels, potentially enabling faster charging rates compared to a single drive unit system.
- Implement safety checks to ensure that the voltage and current levels remain within acceptable ranges throughout the charging process.

The charge port assembly 106 has capacitors C1 and C2, which serve as part of an EMI filtering system. These capacitors help manage electromagnetic interference and ensure compatibility with various charging standards.

The controller system 108 manages the overall charging process, including voltage sensing, drive unit configuration, and charging current control. It implements sophisticated control algorithms to balance the operation of both drive units, ensuring optimal performance and thermal management.

This dual drive unit configuration may provide the following example advantages:
1. Increased charging power capacity for both 400V and 800V charging scenarios, for example.
2. Enhanced flexibility in handling various charging infrastructure voltages.
3. Improved thermal management by distributing the charging load across two drive units.
4. Potential for redundancy, as the electric vehicle charging system 100 may still operate with reduced power if one drive unit fails.

### Electric vehicle charging system 400

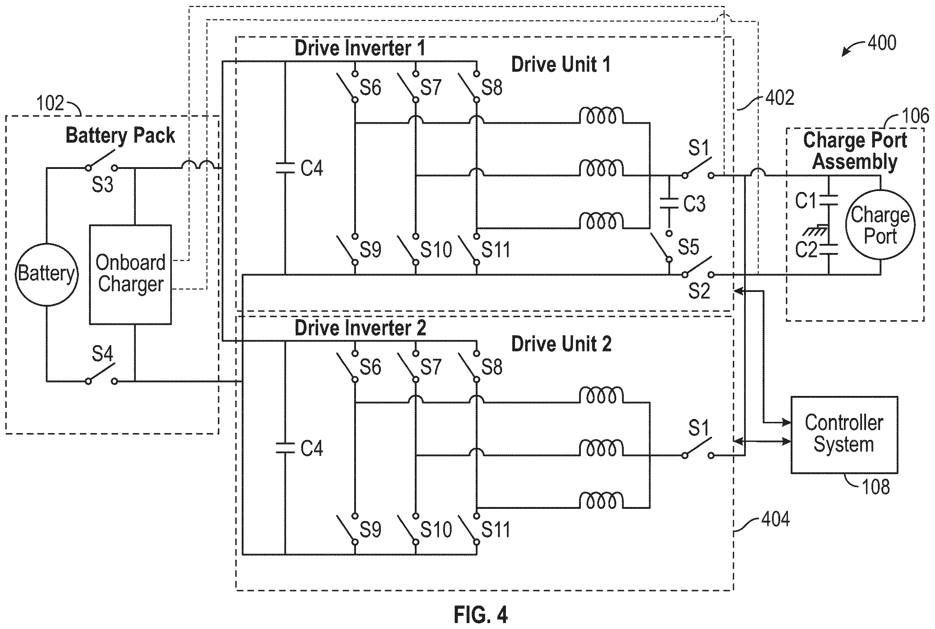

FIG. 4 is a system diagram illustrating an electric vehicle charging system 400 that utilizes two drive units for charging, according to some examples. This configuration is an alternative to the single-drive unit system shown in FIG. 1 and the dual-drive unit system in FIG. 3 while incorporating the charging method depicted in FIG. 2.

The electric vehicle charging system 400 comprises a charge port assembly 106, two drive units (e.g., first drive unit 402 and first drive unit 402), a battery pack 102, and a controller system 108. Each drive unit contains a drive inverter with high-side inverter switches (e.g., S6, S7, S8) and low-side inverter switches (e.g., S9, S10, S11), as well as motor windings that function as inductors during the charging process.

In some examples, the electric vehicle charging system 400 may utilize the two drive units (first drive unit 402 and second drive unit 404) for different charging scenarios.

At a high level, the controller system 108 may configure the drive units differently based on the incoming voltage from the external charging source. For lower voltage charging, only the first drive unit 402 may be utilized as a boost converter. For higher voltage charging, both drive units 402 and 404 may be configured for direct charging without voltage boost.

In more specific examples, the controller system 108 may implement the following configurations:
For lower voltage (e.g., 400V) to higher voltage (e.g., 800V) boost charging:
- Close switches S1, S2, S3, and S4 of the first drive unit 402 only to connect the charge port assembly 106 to the battery pack 102 through the first drive unit 402.
- Configure the inverter switches (S6-S11) in only the first drive unit 402 to operate as switching elements for boost conversion.
- Utilize the motor windings in the first drive unit 402 as inductors for the boost converter circuit.
- Close switch S5 in the first drive unit 402 to activate the x-capacitor (C3) for voltage stabilization.
- Keep the second drive unit 404 inactive during this charging mode.

For higher voltage (e.g., 800V) direct charging:
- Close switches S1, S2, S3, and S4 to connect the charge port assembly 106 to the battery pack 102 through both drive units 402 and 404.
- Close the high-side inverter switches (S6, S7, S8) in both drive units while keeping the low-side inverter switches (S9, S10, S11) open.
- Configure the motor windings in both drive units to act as current pathways.
- Keep switch S5 open in both drive units, as the x-capacitor (C3) is not needed for direct charging.

In even more specific examples, the controller system 108 may:
For boost conversion using the first drive unit 402:
- Implement a PWM control strategy for the inverter switches in the first drive unit 402, operating at frequencies between 5-18 kHz.
- Dynamically adjust the duty cycle of the switches based on the input voltage and desired output voltage.
- Monitor the current through the first drive unit 402 and adjust the boost conversion parameters to optimize efficiency and thermal management.
- Utilize the DC link capacitor (C4) in the first drive unit 402 to help stabilize voltage during the boost conversion process.

For direct charging using both drive units:
- Monitor the current flow through both drive units and adjust the charging rate if necessary to prevent overheating or excessive current in any single component.
- Utilize the parallel configuration of the drive units to handle higher current levels, potentially enabling faster charging rates compared to a single drive unit system.
- Implement safety checks to ensure that the voltage and current levels remain within acceptable ranges throughout the charging process.
- Balance the current flow between the two drive units to optimize charging efficiency and thermal management.

A feature of this configuration is that the negative combined return for the charger is routed through first drive unit 402. This means that the charging current flows through first drive unit 402 for both the positive and negative paths, potentially simplifying the control strategy and reducing the complexity of the charging circuit.

The positive side DC current flow goes through both stator and MOSFET pairs in the first drive unit 402 and the second drive unit 404. This parallel current path allows for higher charging currents to be handled, potentially enabling faster charging rates for 800V charging scenarios.

The charge port assembly 106 includes capacitors C1 and C2, which serve as part of the EMI filtering system. These capacitors help manage electromagnetic interference and ensure compatibility with various charging standards.

The controller system 108 manages the overall charging process, including voltage sensing, drive unit configuration, and charging current control. It implements control algorithms to balance the operation of both drive units, ensuring optimal performance and thermal management.

This configuration may provide some advantages, for example:
1. The flexibility to use a single drive unit for 400V to 800V boost charging reduces complexity for lower-power charging scenarios.
2. The capability to utilize both drive units for high-power 800V charging, enabling faster charging rates.
3. A simplified negative return path through a single drive unit, potentially improving control and reducing electromagnetic interference.
4. An enhanced thermal management by distributing the charging load across two drive units during high-power charging.

### Vehicle 506 Architecture

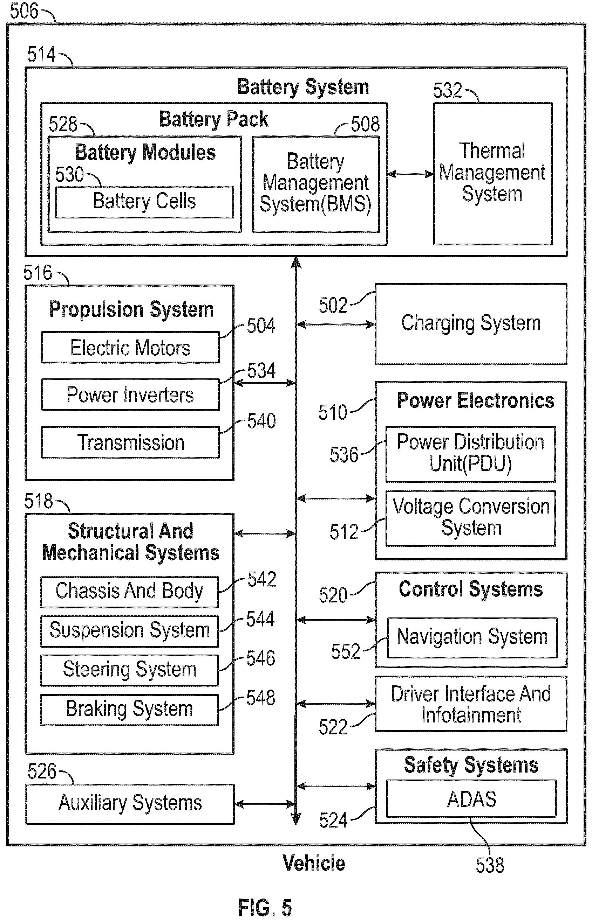

FIG. 5 is a system diagram illustrating an architecture of an electric vehicle (EV) 506, according to some examples. This diagram shows systems and sub-systems that collectively enable the functionality and operational efficiency of the electric vehicle 506.

The vehicle 506 includes several interconnected higher-level systems, including a battery system 514, a propulsion system 516, structural and mechanical systems 518, a charging system 502, power electronics 510, control systems 520, driver interface and infotainment 522, safety systems 524, and auxiliary systems 526.

The battery system 514 comprises battery modules 528 housing multiple battery cells 530. A battery management system (BMS) 508 monitors and manages the battery cells and modules, while a thermal management system 532 regulates the battery temperature.

The propulsion system 516 includes electric motors 504, which may include the motor windings 114 shown in FIG. 1. Power inverters 534 in the propulsion system may include the drive inverter 112 in FIG. 1, facilitating the conversion of DC power from the battery to AC power for the electric motors.

The charging system 502 replenishes the battery system 514 and may incorporate the components shown in FIG. 1, such as the charge port assembly 106, charge port 120, and onboard charger 110. The charging system 502 system supports various charging methodologies, including the boost converter functionality using the drive unit as described in FIG. 1.

The controller system 108 from FIG. 1 is integrated into the broader control systems 520 of the electric vehicle 506 shown in FIG. 5. This integration allows the controller system 108 to manage the overall operation of the vehicle, including critical functions related to charging and propulsion. Specifically, the controller system 108 oversees the charging process by interfacing with components such as the battery pack 102, drive unit 104, and charge port assembly 106.

A function of the controller system 108 within the control systems 520 is its ability to reconfigure the drive unit 104 to function as a boost converter when necessary during charging. This adaptive capability allows the vehicle to efficiently charge from various power sources with different voltage levels. The controller system 108 can determine when to implement this reconfiguration based on the incoming voltage from the external charging source, enabling the vehicle to optimize its charging process across different scenarios.

By being part of the larger control systems 520, the controller system 108 can coordinate its actions with other vehicle systems, such as the propulsion system 516, power electronics 510, and the battery management system (BMS) 508. This integration ensures that charging operations are carried out in harmony with the vehicle's overall state and requirements, potentially improving efficiency and safety during the charging process.

Power electronics 510, including the power distribution unit (PDU) 536 and voltage conversion system 512, may incorporate some of the functionality of the drive inverter 112 and its components from FIG. 1, such as managing and converting electrical power within the vehicle.

The structural and mechanical systems 518, driver interface and infotainment 522, safety systems 524 (including ADAS 538), and auxiliary systems 526 complete the vehicle architecture, supporting the overall functionality and user experience of the electric vehicle.

### Machine 600

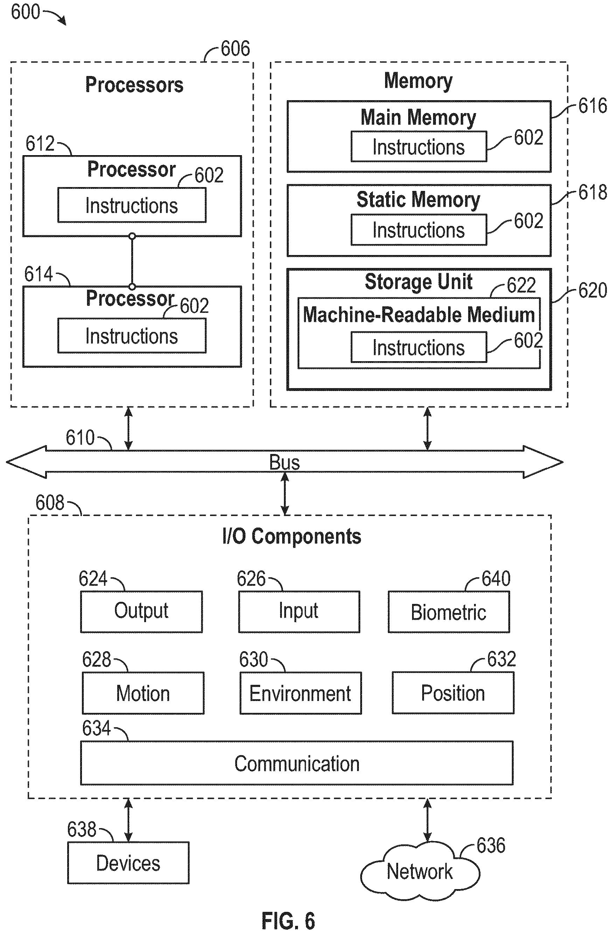

FIG. 6 is a diagrammatic representation of the machine 600 within which instructions 602 (e.g., software, a program, an application, an applet, an app, or other executable code) for causing the machine 600 to perform any one or more of the methodologies discussed herein may be executed. For example, the instructions 602 may cause the machine 600 to execute any one or more of the methods described herein. The instructions 602 transform the general, non-programmed machine 400 into a particular machine 600 programmed to carry out the described and illustrated functions in the manner described. The machine 600 may operate as a standalone device or be coupled (e.g., networked) to other machines. In a networked deployment, the machine 600 may operate in the capacity of a server machine or a client machine in a server-client network environment, or as a peer machine in a peer-to-peer (or distributed) network environment.

The machine 600 may comprise, but not be limited to, a controller system, or components thereof, such as the examples discussed above.

The machine 600 may include processors 604, memory 606, and I/O components 608, which may be configured to communicate via a bus 610. In some examples, the processors 604 (e.g., a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), an Application-Specific Integrated Circuit (ASIC), a Radio-Frequency Integrated Circuit (RFIC), a Tensor Processing Unit (TPU), a Neural Processing Unit (NPU), a Vision Processing Unit (VPU), a Machine Learning Accelerator (MLA), a Cryptographic Acceleration Processor, a Field-Programmable Gate Array (FPGA), a Quantum Processor, another processor, or any suitable combination thereof) may include, for example, a processor 612 and a processor 614 that execute the instructions 602.

Although FIG. 6 shows multiple processors 604, the machine 600 may include a single processor with a single core, a single processor with multiple cores (e.g., a multi-core processor), multiple processors with a single core, multiple processors with multiples cores, or any combination thereof. Modern processor architectures include superscalar, very long instruction word (VLIW), vector processor, multi-core, manycore, neuromorphic, and quantum architectures.

The memory 606 includes a main memory 616, a static memory 618, and a storage unit 620, both accessible to the processors 604 via the bus 610. The main memory 606, the static memory 618, and storage unit 620 store the instructions 602 embodying any one or more of the methodologies or functions described herein. The instructions 602 may also reside, wholly or partially, within the main memory 616, within the static memory 618, within machine-readable medium 622 within the storage unit 620, within the processors 604 (e.g., within the processor's cache memory), or any suitable combination thereof, during execution thereof by the machine 600.

The I/O components 608 may include various components to receive input, provide output, produce output, transmit information, exchange information, or capture measurements. The specific I/O components 608 included in a particular machine depend on the type of machine. For example, portable machines such as mobile phones may include a touch input device or other such input mechanisms, while a headless server machine will likely not include such a touch input device. The I/O components 608 may include many other components not shown in FIG. 6. In various examples, the I/O components 608 may include output components 624 and input components 626. The output components 624 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), or other signal generators. The input components 626 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

The motion components 628 include acceleration sensor components (e.g., accelerometer), gravitation sensor components, rotation sensor components (e.g., gyroscope). The environmental components 630 include, for example, one or cameras, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 632 include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 608 further include communication components 634 operable to couple the machine 600 to a network 636 or devices 638 via respective coupling or connections. For example, the communication components 634 may include a network interface Component or another suitable device to interface with the network 636. In further examples, the communication components 634 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 638 may be another machine or any of a wide variety of peripheral devices (e.g., a peripheral device coupled via a USB).

Moreover, the communication components 634 may detect identifiers or include components operable to detect identifiers. For example, the communication components 634 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Data glyph, Maxi Code, PDF417, Ultra Code, UCC RSS-2D bar code, and other optical codes), or acoustic detection components (e.g., microphones to identify tagged audio signals). In addition, a variety of information may be derived via the communication components 634, such as location via Internet Protocol (IP) geolocation, location via Wi-Fi^{®} signal triangulation, or location via detecting an NFC beacon signal that may indicate a particular location.

The various memories (e.g., main memory 616, static memory 618, and/or memory of the processors 604) and/or storage unit 620 may store one or more sets of instructions and data structures (e.g., software) embodying or used by any one or more of the methodologies or functions described herein. These instructions (e.g., the instructions 602), when executed by processors 604, cause various operations to implement the disclosed examples.

The instructions 602 may be transmitted or received over the network 636, using a transmission medium, via a network interface device (e.g., a network interface component included in the communication components 634) and using any one of several well-known transfer protocols (e.g., hypertext transfer protocol (HTTP)). Similarly, the instructions 602 may be transmitted or received using a transmission medium via a coupling (e.g., a peer-to-peer coupling) to the devices 638.

### Examples

In view of the disclosure above, various examples are set forth below. It should be noted that one or more features of an example, taken in isolation or combination, should be considered within the disclosure of this application.

Example 1 is a method for charging an electric vehicle, comprising: receiving power from an external charging source; reconfiguring a drive unit of the electric vehicle to function as a boost converter, wherein the drive unit includes a motor and an inverter; boosting a voltage received from the external charging source using the reconfigured drive unit; and charging a battery pack of the electric vehicle with the boosted voltage.

In Example 2, the subject matter of Example 1 further comprises: determining a voltage level of the external charging source; evaluating whether the determined voltage is sufficient for direct charging of the battery pack; and if the voltage is sufficient for direct charging, configuring the system for direct charging.

In Example 3, the subject matter of Examples 1-2, wherein determining the voltage level comprises measuring an electrical parameter at a charge port interface using sensors integrated into a charge port assembly.

In Example 4, the subject matter of Examples 1-3, wherein evaluating whether the determined voltage is sufficient for direct charging comprises comparing the measured voltage to a predetermined threshold and considering the current voltage of the battery pack, the maximum charging voltage supported by the battery pack, and the minimum voltage differential required for efficient charging.

In Example 5, the subject matter of Examples 1-4, wherein reconfiguring the drive unit comprises utilizing motor windings as inductors in the boost converter.

In Example 6, the subject matter of Examples 1-5, wherein reconfiguring the drive unit comprises utilizing inverter switches as switching elements in the boost converter.

In Example 7, the subject matter of Examples 1-6, wherein reconfiguring the drive unit as a boost converter comprises selecting either high-side or low-side inverter switches for conduction based on factors including thermal management and efficiency optimization.

In Example 8, the subject matter of Examples 1-7, further comprising utilizing a DC link capacitor of the inverter as an output capacitor for the boost converter.

In Example 9, the subject matter of Examples 1-8, further comprising maintaining a high-voltage bus at the battery pack voltage during charging.

In Example 10, the subject matter of Examples 1-9, wherein the method operates without a dedicated switch for direct connection during high-voltage charging.

In Example 11, the subject matter of Examples 1-10, further comprising utilizing one side of the inverter as a contactor during high-voltage charging.

In Example 12, the subject matter of Examples 1-11, further comprising implementing an adaptive control strategy for inverter switches during charging, wherein the adaptive control strategy dynamically adjusts switching patterns based on charging conditions.

In Example 13, the subject matter of Examples 1-12, wherein the adaptive control strategy is capable of utilizing either high-side or low-side switches based on charging conditions.

In Example 14, the subject matter of Examples 1-13, wherein the external charging source is configured to provide power at either 400V or 800V.

In Example 15, the subject matter of Examples 1-14, wherein for 400V charging sources, the method comprises boosting the voltage to charge the battery pack.

In Example 16, the subject matter of Examples 1-15, wherein for 800V charging sources, the method comprises conducting charging current through motor windings and inverter switches without boosting.

In Example 17, the subject matter of Examples 1-16, further comprising integrating an X-Cap and EMI filter within the drive unit to manage electromagnetic interference and ensure regulatory compliance.

In Example 18, the subject matter of Examples 1-17, wherein the method is compatible with both even and odd-number module battery architectures.

Example 19 is an electric vehicle charging system, comprising: a drive unit including a motor and an inverter; a battery pack; a charging interface configured to receive power from an external charging source; and a controller configured to: reconfigure the drive unit to function as a boost converter; boost a voltage received from the external charging source using the reconfigured drive unit; and charge the battery pack with the boosted voltage.

In Example 20, the subject matter of Example 19, wherein the controller is further configured to: determine a voltage level of the external charging source; evaluate whether the determined voltage is sufficient for direct charging of the battery pack; and if the voltage is sufficient for direct charging, configure the system for direct charging.

In Example 21, the subject matter of Examples 19-20, wherein the motor windings are configured to function as inductors in the boost converter.

In Example 22, the subject matter of Examples 19-21, wherein the inverter switches are configured to function as switching elements in the boost converter.

In Example 23, the subject matter of Examples 19-22, further comprising a DC link capacitor configured to function as an output capacitor for the boost converter.

In Example 24, the subject matter of Examples 19-23, wherein the controller is further configured to maintain a high-voltage bus at the battery pack voltage during charging.

In Example 25, the subject matter of Examples 19-24, wherein the system operates without a dedicated switch for direct connection during high-voltage charging.

Example 26, the subject matter of Examples 19-25, wherein one side of the inverter is configured to function as a contactor during high-voltage charging.

In Example 27, the subject matter of Examples 19-26, wherein the controller is configured to implement an adaptive control strategy for the inverter switches during charging, the adaptive control strategy capable of utilizing either high-side or low-side switches based on charging conditions.

In Example 28, the subject matter of Examples 19-27, wherein the charging interface is configured to receive power from both 400V and 800V charging sources.

In Example 29, the subject matter of Examples 19-28, wherein for 400V charging sources, the controller is configured to boost the voltage to charge the battery pack.

In Example 30, the subject matter of Examples 19-29, wherein for 800V charging sources, the controller is configured to conduct charging current through motor windings and inverter switches without boosting.

In Example 31, the subject matter of Examples 19-30, further comprising an X-Cap and EMI filter integrated within the drive unit, wherein the X-Cap and EMI filter are configured to manage electromagnetic interference and ensure regulatory compliance.

In Example 32, the subject matter of Examples 19-31, wherein the system is configured to be compatible with both even and odd-number module battery architectures.

Example 33 is an electric vehicle charging system, comprising: a drive unit including a motor and an inverter; a battery pack; a charging interface configured to receive power from an external charging source; and a controller configured to: determine a voltage level of the external charging source; evaluate whether the determined voltage is sufficient for direct charging of the battery pack; configure the system for direct charging based on the voltage being sufficient for direct charging; reconfigure the drive unit to function as a boost converter based on the voltage being insufficient for direct charging; cause boosting of a voltage received from the external charging source using the reconfigured drive unit based on the voltage being insufficient for direct charging; and charge the battery pack with the boosted voltage.

In Example 34, the subject matter of Example 33 includes motor windings of the motor configured to function as inductors in the boost converter.

In Example 35, the subject matter of Examples 33-34 includes inverter switches of the inverter configured to function as switching elements in the boost converter.

In Example 36, the subject matter of Examples 33-35 includes a DC link capacitor configured to function as an output capacitor for the boost converter.

In Example 37, the subject matter of Examples 33-36 includes one side of the inverter configured to function as a contactor during high-voltage charging.

In Example 38, the subject matter of Examples 33-37 includes the charging interface capable of receiving power from both a lower-voltage charging source and a higher-voltage charging source.

In Example 39, the subject matter of Example 38 includes the controller configured to: boost the voltage to charge the battery pack for the lower-voltage charging source; and conduct charging current through motor windings and inverter switches without boosting for the higher-voltage charging source.

In Example 40, the subject matter of Examples 33-39 includes an EMI filter and an X-capacitor integrated within the drive unit.

In Example 41, the subject matter of Examples 33-40 includes the controller further configured to implement an adaptive control strategy for inverter switches during charging, the adaptive control strategy capable of utilizing either high-side or low-side inverter switches based on charging conditions.

In Example 42, the subject matter of Examples 33-41 includes the controller further configured to maintain a high-voltage bus at the battery pack voltage during charging, enabling auxiliary systems to operate at their optimal voltage.

Example 43 is a method for charging an electric vehicle, the method comprising: determining a voltage level of an external charging source; comparing the determined voltage level to a threshold voltage required for direct charging of a battery pack; configuring a drive unit of the electric vehicle to function as a boost converter based on the determined voltage level being below the threshold voltage required for direct charging; boosting a voltage received from the external charging source using the configured drive unit; and charging the battery pack with the boosted voltage.

In Example 44, the subject matter of Example 43 includes configuring a charging system for direct charging based on the determined voltage level being at or above the threshold voltage required for direct charging.

In Example 45, the subject matter of Examples 43-44 includes determining the voltage level comprising measuring an electrical parameter at a charge port interface using sensors integrated into a charge port assembly.

In Example 46, the subject matter of Examples 43-45 includes the drive unit comprising an electric motor and an inverter, and the configuring of the drive unit of the electric vehicle comprising utilizing motor windings of the electric motor as inductors and inverter switches of the inverter as switching elements to boost the voltage received from the external charging source.

In Example 47, the subject matter of Examples 43-46 includes implementing an adaptive control strategy for inverter switches during charging, wherein the adaptive control strategy dynamically adjusts switching patterns based on charging conditions.

In Example 48, the subject matter of Examples 43-47 includes: boosting the voltage to charge the battery pack based on the external charging source providing power at a relatively lower voltage; and conducting charging current through motor windings and inverter switches without boosting based on the external charging source providing power at a relatively higher voltage.

Example 49 is an electric vehicle, comprising: a propulsion system including electric motors and power inverters; a battery system including a battery pack and a battery management system; a charging system including a charging interface configured to receive power from an external charging source; and a controller configured to: determine a voltage of the external charging source; evaluate whether the determined voltage is sufficient for direct charging of the battery pack; configure the charging system for direct charging based on the voltage being sufficient for direct charging; configure at least one of the electric motors and an associated power inverter to function as a boost converter based on the voltage being insufficient for direct charging; and cause the charging system to boost a voltage received from the external charging source using the least one of the electric motors and the associated power inverter based on the voltage being insufficient for direct charging, in order to charge the battery pack with the boosted voltage.

In Example 50, the subject matter of Example 49 includes the controller further configured to maintain a high-voltage bus at the battery pack voltage during charging, enabling auxiliary systems to operate at or near a determined voltage.

In Example 51, the subject matter of Examples 49-50 includes an EMI filter and an X-capacitor integrated within the propulsion system.

In Example 52, the subject matter of Examples 49-51 includes the charging system being compatible with both even and odd-number module battery configurations, and wherein the controller is further configured to adjust a voltage boosting level based on a determined battery pack configuration.

Example 53 is an electric vehicle power management system, comprising: a propulsion unit with motor windings and power switching elements; an energy storage device; a power input interface; and a control module configured to: assess an input power characteristic from the power input interface; determine if the input power characteristic meets a threshold for direct energy transfer to the energy storage device; initiate direct energy transfer when the threshold is met; and when the threshold is not met: reconfigure the propulsion unit to operate as a power converter, elevate the input power characteristic using the reconfigured propulsion unit, and facilitate energy transfer to the energy storage device using the elevated power characteristic.

In Example 54, the subject matter of Example 53 includes the control module further configured to maintain a high-voltage power rail at the energy storage device voltage during energy transfer, enabling auxiliary vehicle systems to operate at their design voltages.

In Example 55, the subject matter of Examples 53-54 includes the power switching elements configured to function as switching components in the power converter when the propulsion unit is reconfigured.

Example 56 is a method for managing power in an electric vehicle, comprising: receiving input power at a vehicle charging interface; analyzing a parameter of the input power; comparing the analyzed parameter to a predetermined threshold; based on the comparison indicating the parameter meets the threshold, initiating direct power transfer to a vehicle energy storage system; and based on the comparison indicating the parameter does not meet the threshold: adapting a vehicle propulsion system to function as a power enhancement circuit, using the adapted propulsion system to modify the input power parameter, and transferring the modified power to the vehicle energy storage system.

In Example 57, the subject matter of Example 56 includes implementing an adaptive control strategy for the power enhancement circuit, wherein the strategy dynamically adjusts operational patterns based on power transfer conditions.

In Example 58, the subject matter of Examples 56-57 includes: enhancing the input power when the charging interface receives power from a lower-voltage source; and conducting power transfer without enhancement when the charging interface receives power from a higher-voltage source.

Example 59 is an electric vehicle energy management apparatus, comprising: a multiphase motor; a power inverter associated with the motor; an energy storage unit; a power reception port; and a controller programmed to: evaluate a power characteristic at the power reception port; determine whether the power characteristic is compatible with direct charging of the energy storage unit; when compatible, initiate direct charging; and when not compatible: reconfigure at least one phase of the motor and a portion of the power inverter to form a power enhancement circuit, use the power enhancement circuit to adjust the power characteristic to a level compatible with the energy storage unit, and initiate charging using the adjusted power.

In Example 60, the subject matter of Example 59 includes the controller further programmed to implement a variable control scheme for the power enhancement circuit, capable of utilizing different switching strategies based on charging conditions.

In Example 61, the subject matter of Examples 59-60 includes an electromagnetic interference mitigation component integrated within the motor and power inverter assembly.

In Example 62, the subject matter of Examples 59-61 includes the energy management apparatus configured to be compatible with energy storage units having both even and odd numbers of modules.

In Example 63, the subject matter of Examples 59-62 includes the controller further programmed to maintain a consistent high-voltage bus voltage during charging operations, allowing auxiliary vehicle systems to operate at their designed voltage levels.

Further examples are set out in the clauses below:
1. An electric vehicle charging system, comprising:
   a drive unit including a motor and an inverter;
   a charging interface configured to receive power from an external charging source; and
   a controller configured to:
      determine a voltage level of the external charging source;
      determine that the determined voltage is insufficient for direct charging of a battery pack; configure the drive unit to function as a boost converter based on the determined voltage being insufficient for direct charging;
      cause boosting of a voltage received from the external charging source using the drive unit,
      based on the voltage being insufficient for direct charging, to cause charging of the battery pack with the boosted voltage.
2. The system of clause 1, wherein the controller is further configured to:
   determined that the determined voltage is sufficient for direct charging of the battery pack; and
   configure the drive unit for direct charging based on the determined voltage being sufficient for direct charging;
3. The system of clause 1, wherein motor windings of the motor are configured to function as inductors in the boost converter.
4. The system of clause 1, wherein the configuring of the drive unit to function as the boost converter comprises configuring the inverter switches of the inverter to function as switching elements.
5. The system of clause 1, wherein configuring the inverter switches of the inverter to function as switching elements comprises configuring one side of the inverter to function as a contactor during high-voltage charging.
6. The system of clause 5, wherein the charging interface is capable of receiving power from both a lower-voltage charging source and a higher-voltage charging source.
7. The system of clause 6, wherein the controller is configured to:
   causing boosting of the voltage to charge the battery pack for the lower-voltage charging source; and
   conduct charging current through motor windings and inverter switches without boosting for the higher-voltage charging source.
8. The system of any one of the preceding clauses, further comprising an EMI filter and an X-capacitor integrated within the drive unit.
9. The system of any one of the preceding clauses, further comprising a DC link capacitor configured to function as an output capacitor for the boost converter.
10. The system of any one of the preceding clauses, wherein the controller is further configured to maintain a high-voltage bus at the battery pack voltage during charging, enabling auxiliary systems to operate at their optimal voltage.
11. A method for charging an electric vehicle, the method comprising:
   determining a voltage level of an external charging source;
   comparing the determined voltage level to a threshold voltage required for direct charging of a battery pack;
   configuring a drive unit of the electric vehicle to function as a boost converter based on the determined voltage level being below the threshold voltage required for direct charging;
   boosting a voltage received from the external charging source using the configured drive unit; and
   charging the battery pack with the boosted voltage
12. The method of clause 11, further comprising:
   configuring a charging system for direct charging based on the determined voltage level being at or above the threshold voltage required for direct charging.
13. The method of clause 11 or 12, wherein determining the voltage level comprises measuring an electrical parameter at a charge port interface using sensors integrated into a charge port assembly.
14. The method of any one of clauses 11-13, wherein the drive unit comprises an electric motor and an inverter, and the configuring of the drive unit of the electric vehicle comprises utilizing motor windings of the electric motor as inductors and inverter switches of the inverter as switching elements to boost the voltage received form the external charging source.
15. The method of any one of clauses 11-14, further comprising implementing an adaptive control strategy for inverter switches during charging, wherein the adaptive control strategy dynamically adjusts switching patterns based on charging conditions.
16. The method of any one of clauses 11-15, further comprising:
   boosting the voltage to charge the battery pack based on the external charging source providing power at a relatively lower voltage; and
   conducting charging current through motor windings and inverter switches without boosting based on the external charging source providing power at a relatively higher voltage.
17. An electric vehicle, comprising:
   a propulsion system including electric motors and power inverters; a battery system including a battery pack and a battery management system;
   a charging system including a charging interface configured to receive power from an external charging source; and
   a controller configured to:
      determine a voltage of the external charging source;
      evaluate whether the determined voltage is sufficient for direct charging of the battery pack;
      at least one of:
         configure the charging system for direct charging based on the voltage being sufficient for direct charging;
         configure at least one of the electric motors and an associated power inverter to function as a boost converter based on the voltage being insufficient for direct charging; and
         cause the charging system to boost a voltage received from the external charging source using the least one of the electric motors and the associated power inverter based
         on the voltage being insufficient for direct charging, in order to charge the battery pack with the boosted voltage.
18. The electric vehicle of clause 17, wherein the controller is further configured to maintain a high-voltage bus at the battery pack voltage during charging, enabling auxiliary systems to operate at or near a determined voltage.
19. The electric vehicle of clause 17 or 18, further comprising an EMI filter and an X-capacitor integrated within the propulsion system.
20. The electric vehicle of any one of clauses 17-19, wherein the charging system is compatible with both even and odd-number module battery configurations, and wherein the controller is further configured to adjust a voltage boosting level based on a determined battery pack configuration

### Glossary

"Component" may include a device, physical entity, or logic having boundaries defined by function or subroutine calls, branch points, APIs, or other technologies that provide for the partitioning or modularization of particular processing or control functions. Components may be combined via their interfaces with other components to carry out a machine process. A component may be a packaged functional hardware unit designed for use with other components and a part of a program that usually performs a particular function of related functions. Components may constitute either software components (e.g., code embodied on a machine-readable medium) or hardware components. A "hardware component" is a tangible unit capable of performing certain operations and may be configured or arranged in a certain physical manner In some examples, one or more computer systems (e.g., a standalone computer system, a client computer system, or a server computer system) or one or more hardware components of a computer system (e.g., a processor or a group of processors) may be configured by software (e.g., an application or application portion) as a hardware component that operates to perform certain operations as described herein. A hardware component may also be implemented mechanically, electronically, or any suitable combination thereof. For example, a hardware component may include dedicated circuitry or logic that is permanently configured to perform certain operations. A hardware component may be a special-purpose processor, such as a field-programmable gate array (FPGA) or an application-specific integrated circuit (ASIC).A hardware component may also include programmable logic or circuitry that is temporarily configured by software to perform certain operations. For example, a hardware component may include software executed by a general-purpose processor or other programmable processor. Once configured by such software, hardware components become specific machines (or specific components of a machine) uniquely tailored to perform the configured functions and are no longer general-purpose processors. A decision to implement a hardware component mechanically, in dedicated and permanently configured circuitry, or in temporarily configured circuitry (e.g., configured by software), may be driven by cost and time considerations. Accordingly, the phrase "hardware component"(or "hardware-implemented component") should be understood to encompass a tangible entity, be that an entity that is physically constructed, permanently configured (e.g., hardwired), or temporarily configured (e.g., programmed) to operate in a certain manner or to perform certain operations described herein. Considering examples in which hardware components are temporarily configured (e.g., programmed), each of the hardware components need not be configured or instantiated at any one instance in time. For example, where a hardware component comprises a general-purpose processor configured by software to become a special-purpose processor, the general-purpose processor may be configured as different special-purpose processors (e.g., comprising different hardware components) at different times. Software accordingly configures a particular processor or processors, for example, to constitute a particular hardware component at one instance of time and to constitute a different hardware component at a different instance of time. Hardware components can provide information to, and receive information from, other hardware components. Accordingly, the described hardware components may be regarded as being communicatively coupled. Where multiple hardware components exist contemporaneously, communications may be achieved through signal transmission (e.g., over appropriate circuits and buses) between or among two or more of the hardware components. In examples in which multiple hardware components are configured or instantiated at different times, communications between such hardware components may be achieved, for example, through the storage and retrieval of information in memory structures to which the multiple hardware components have access. For example, one hardware component may perform an operation and store the output of that operation in a memory device to which it is communicatively coupled. A further hardware component may then, at a later time, access the memory device to retrieve and process the stored output. Hardware components may also initiate communications with input or output devices, and can operate on a resource (e.g., a collection of information). The various operations of example methods described herein may be performed, at least partially, by one or more processors that are temporarily configured (e.g., by software) or permanently configured to perform the relevant operations. Whether temporarily or permanently configured, such processors may constitute processor-implemented components that operate to perform one or more operations or functions described herein. As used herein, "processor-implemented component" refers to a hardware component implemented using one or more processors. Similarly, the methods described herein may be at least partially processor-implemented, with a particular processor or processors being an example of hardware. For example, at least some of the operations of methods described herein may be performed by one or more processors 1004 or processor-implemented components. Moreover, the one or more processors may also operate to support performance of the relevant operations in a "cloud computing" environment or as a "software as a service" (SaaS).For example, at least some of the operations may be performed by a group of computers (as examples of machines including processors), with these operations being accessible via a network (e.g., the Internet) and via one or more appropriate interfaces (e.g., an API).The performance of certain of the operations may be distributed among the processors, not only residing within a single machine, but deployed across a number of machines. In some examples, the processors or processor-implemented components may be located in a single geographic location (e.g., within a home environment, an office environment, or a server farm).In some examples, the processors or processor-implemented components may be distributed across a number of geographic locations.

"High-speed charger" may include an electric vehicle charging station capable of delivering direct current (DC) power at high-voltage and amperage levels, typically providing 50 kW or more of charging power. These chargers may be designed to rapidly replenish an electric vehicle's battery, significantly reducing charging times compared to lower-power alternatives. High-speed chargers may operate at voltage levels of 400 to 900 volts DC or higher, for example.

"Drive unit" may include an assembly comprising an electric motor, an inverter, and associated control electronics used for propulsion and/or energy conversion in an electric vehicle. It may encompass components such as motor windings, inverter switches, and capacitors that can be reconfigured for different operational modes.

"Boost converter" may include any electrical circuit or system capable of increasing an input voltage to a higher output voltage. In the context of electric vehicle charging, it may refer to the reconfiguration of existing drive unit components to perform voltage step-up functions.

"Charging interface" may include any physical or electrical connection point designed to receive power from an external charging source. This may encompass charge ports, connectors, and associated circuitry for interfacing with various charging infrastructures.

"Controller" may include any electronic control unit, microprocessor, or computational system capable of managing and coordinating the operations of various vehicle systems. It may encompass functions related to power management, charging control, and system reconfiguration.

"Open Circuit Voltage (OCV)" refers to the voltage measured across the terminals of the battery pack when it is not connected to any load or charging source. It represents the potential difference between the positive and negative terminals of the battery pack in its resting state.

"Processor" may include, in some examples, one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may, for example, include at least one of a Central Processing Unit (CPU), a Reduced Instruction Set Computing (RISC) processor, a Complex Instruction Set Computing (CISC) processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a neuromorphic processor, a quantum processor, or any combination thereof.

A processor may further be a multi-core processor having two or more independent processors (sometimes referred to as "cores") that may execute instructions contemporaneously. Multi-core processors contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently.

A processor may be emulated in software, running on a physical processor, as a virtual processor or virtual circuit. The virtual processor may behave like an independent processor but is implemented in software rather than hardware.

## Claims

1. An electric vehicle charging system, comprising:
a drive unit including a motor and an inverter;
a charging interface configured to receive power from an external charging source; and
a controller configured to:
determine a voltage level of the external charging source;
determine that the determined voltage is insufficient for direct charging of a battery pack;
configure the drive unit to function as a boost converter based on the determined voltage being insufficient for direct charging;
cause boosting of a voltage received from the external charging source using the drive unit, based on the voltage being insufficient for direct charging, to cause charging of the battery pack with the boosted voltage.

2. The system of claim 1, wherein the controller is further configured to:
determined that the determined voltage is sufficient for direct charging of the battery pack; and
configure the drive unit for direct charging based on the determined voltage being sufficient for direct charging;

3. The system of claim 1, wherein motor windings of the motor are configured to function as inductors in the boost converter.

4. The system of claim 1, wherein the configuring of the drive unit to function as the boost converter comprises configuring the inverter switches of the inverter to function as switching elements.

5. The system of any one of the preceding claims, wherein configuring the inverter switches of the inverter to function as switching elements comprises configuring one side of the inverter to function as a contactor during high-voltage charging.

6. The system of claim 5, wherein the charging interface is capable of receiving power from both a lower-voltage charging source and a higher-voltage charging source.

7. The system of claim 6, wherein the controller is configured to:
causing boosting of the voltage to charge the battery pack for the lower-voltage charging source; and
conduct charging current through motor windings and inverter switches without boosting for the higher-voltage charging source.

8. The system of any one of the preceding claims, further comprising an EMI filter and an X-capacitor integrated within the drive unit.

9. The system any one of the preceding claims, further comprising a DC link capacitor configured to function as an output capacitor for the boost converter.

10. The system of claim 1, wherein the controller is further configured to maintain a high-voltage bus at the battery pack voltage during charging, enabling auxiliary systems to operate at their optimal voltage.

11. A method for charging an electric vehicle, the method comprising:
determining a voltage level of an external charging source;
comparing the determined voltage level to a threshold voltage required for direct charging of a battery pack;
configuring a drive unit of the electric vehicle to function as a boost converter based on the determined voltage level being below the threshold voltage required for direct charging;
boosting a voltage received from the external charging source using the configured drive unit; and
charging the battery pack with the boosted voltage

12. The method of claim 11, further comprising:
configuring a charging system for direct charging based on the determined voltage level being at or above the threshold voltage required for direct charging.

13. The method of claim 11 or 12, wherein determining the voltage level comprises measuring an electrical parameter at a charge port interface using sensors integrated into a charge port assembly; or optionally
wherein the drive unit comprises an electric motor and an inverter, and the configuring of the drive unit of the electric vehicle comprises utilizing motor windings of the electric motor as inductors and inverter switches of the inverter as switching elements to boost the voltage received form the external charging source; or optionally
further comprising implementing an adaptive control strategy for inverter switches during charging, wherein the adaptive control strategy dynamically adjusts switching patterns based on charging conditions; or optionally
further comprising:
boosting the voltage to charge the battery pack based on the external charging source providing power at a relatively lower voltage; and
conducting charging current through motor windings and inverter switches without boosting based on the external charging source providing power at a relatively higher voltage

14. An electric vehicle, comprising:
a propulsion system including electric motors and power inverters; a battery system including a battery pack and a battery management system;
a charging system including a charging interface configured to receive power from an external charging source; and
a controller configured to:
determine a voltage of the external charging source;
evaluate whether the determined voltage is sufficient for direct charging of the battery pack;
at least one of:
configure the charging system for direct charging based on the voltage being sufficient for direct charging;
configure at least one of the electric motors and an associated power inverter to function as a boost converter based on the voltage being insufficient for direct charging; and
cause the charging system to boost a voltage received from the external charging source using the least one of the electric motors and the associated power inverter based on the voltage being insufficient for direct charging, in order to charge the battery pack with the boosted voltage.

15. The electric vehicle of claim 14, wherein the controller is further configured to maintain a high-voltage bus at the battery pack voltage during charging, enabling auxiliary systems to operate at or near a determined voltage; or optionally
further comprising an EMI filter and an X-capacitor integrated within the propulsion system; or optionally
wherein the charging system is compatible with both even and odd-number module battery configurations, and wherein the controller is further configured to adjust a voltage boosting level based on a determined battery pack configuration.
